(19) Europäisches Patentamt
European Patent Office
Office européen des brevets

(11) **EP 4 285 389 B1**

(12) **EUROPEAN PATENT SPECIFICATION**

(45) Date of publication and mention
of the grant of the patent:
**16.07.2025 Bulletin 2025/29**

(21) Application number: **22703441.0**

(22) Date of filing: **31.01.2022**

(51) International Patent Classification (IPC):
**G21B 1/13** *(2006.01)*    **B23K 20/12** *(2006.01)*
**B23K 20/227** *(2006.01)*    **C22C 38/06** *(2006.01)*
**C22C 38/22** *(2006.01)*    **C22C 38/26** *(2006.01)*
**C22C 38/28** *(2006.01)*    **B23K 103/04** *(2006.01)*

(52) Cooperative Patent Classification (CPC):
**G21B 1/13; B23K 20/122; B23K 20/227;
C22C 38/06; C22C 38/22; C22C 38/26;
C22C 38/28;** B23K 2103/04; C21D 2211/004;
Y02E 30/10

(86) International application number:
**PCT/GB2022/050248**

(87) International publication number:
**WO 2022/162393 (04.08.2022 Gazette 2022/31)**

(54) **NUCLEAR FUSION BREEDER BLANKET**

KERNFUSIONSBRÜTER-BLANKET

COUVERTURE TRITIGÈNE DE FUSION NUCLÉAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.01.2021 GB 202101236**

(43) Date of publication of application:
**06.12.2023 Bulletin 2023/49**

(73) Proprietor: **Oxford Sigma Limited
Didcot, Oxfordshire OX11 0QG (GB)**

(72) Inventors:
• **DAVIS, Thomas
Didcot, Oxfordshire OX11 0QG (GB)**
• **MUSGROVE, Jonathan
Didcot, Oxfordshire OX11 0QG (GB)**

(74) Representative: **Holt, Lucy Rose et al
Maucher Jenkins
Seventh Floor Offices
Artillery House
11-19 Artillery Row
London SW1P 1RT (GB)**

(56) References cited:
• **FDS TEAM ET AL: "Fusion-based hydrogen
production reactor and its material selection",
JOURNAL OF NUCLEAR MATERIALS, ELSEVIER
B.V, NETHERLANDS, vol. 386-388, 30 April 2009
(2009-04-30), pages 122 - 126, XP026054189,
ISSN: 0022-3115, [retrieved on 20090416]**
• **MORLEY N B ET AL: "Recent research and
development for the dual-coolant blanket
concept in the US", FUSION ENGINEERING AND
DESIGN, ELSEVIER SCIENCE PUBLISHERS,
AMSTERDAM, NL, vol. 83, no. 7-9, 1 December
2008 (2008-12-01), pages 920 - 927,
XP025796468, ISSN: 0920-3796, [retrieved on
20080701], DOI: 10.1016/
J.FUSENGDES.2008.04.012**

**Description**

**Field of disclosure**

The present invention relates to material configurations of breeder blankets for fusion-based nuclear reactors.

**Background**

As the demand for greener, cleaner energy grows, the energy sector shows an increasing interest in nuclear fusion energy technology. Nuclear fusion is a physical reaction where two nuclei fuse together, in response to them overcoming their Columbic repulsion. Nuclear fusion energy technology exploits this fundamental nuclear reaction through the fusion of two isotopes of hydrogen.

Hydrogen is the lightest known chemical element and is the most abundant chemical substance in the universe, constituting roughly 75 % of all baryonic mass. Hydrogen has three naturally occurring isotopes: Protium (P), Deuterium (D), and Tritium (T). P is the most common isotope of hydrogen, and has one proton and no neutron. It accounts for more than 99.98% all the naturally occurring hydrogen in the Earth's oceans. D, also known as heavy hydrogen, contains one proton and one neutron and has a natural abundance in Earth's oceans of about one atom in 6420 of hydrogen, accounting for approximately 0.02 % (0.03 % by mass) of all the naturally occurring hydrogen in the oceans. T is a rare and radioactive isotope of hydrogen, and contains one proton and two neutrons. Naturally occurring tritium is extremely rare on Earth. The atmosphere has only trace amounts, formed by the interaction of its gases with cosmic rays. Nuclear fusion energy technology exploits the nuclear fusion of plasmas of D and T.

For magnetically confined fusion, D-T plasmas fuse under extreme temperatures (>50,000,000 °C), releasing energetic neutrons and helium nuclei. Around 80 % of the 17.6 MeV of energy generated by fusion of D-T is acquired by the released neutron. This reaction is summarised in the following equation:

$$\mathrm{{}_1^2 D} + \mathrm{{}_1^3 T} \; \rightarrow \; \mathrm{{}_2^4 He}\,(3.52\ \mathrm{MeV}) + \; \mathrm{n^0}\,(14.06\ \mathrm{MeV})$$

A number of magnetic confinement D-T plasma fusion devices, such as magnetic mirrors, the Z-Pinch, the Stellarator and the Tokamak, have been researched and developed over the years. To date, the most popular method of achieving D-T fusion is to use a Tokamak, which uses a powerful magnetic field to confine hot D-T plasma in the shape of a torus.

The most advanced Tokamak designs are 'D' shaped Tokamaks (also known as a conventional Tokamak) such as the Joint European Torus and ITER, and spherical Tokamaks, which minimises the inner radius of the torus. Spherical Tokamaks have an aspect ratio of A < 2.5, wherein the aspect ratio, A, is defined as the ratio of the major radius of the torus to the minor radius of the torus. The typical features of Tokamaks include a high plasma current, large plasma volume, auxiliary heating for plasma start-up and heating, and a strong toroidal magnetic field supplied by either conventional or superconducting magnets. For power generating fusion conditions, a Tokamak device needs to maintain a high confinement time, high plasma density, and high temperature to enable self-sustaining fusion.

Tritium is difficult to obtain in the quantities needed for fusion reactors. For a D-T fuelled fusion reactor, Tritium must be 'breed' in the reactor via the neutrons produced from the D-T fusion reaction. The most efficient approach is through the capture of a neutron with lithium to generate tritium by the following reactions:

$$\mathrm{{}_3^6 Li} + \mathrm{n^0} \; \rightarrow \; \mathrm{{}_2^4 He} + \; \mathrm{{}_1^3 T} \; + \; 4.78\ \mathrm{MeV}$$

$$\mathrm{{}_3^7 Li} + \mathrm{n^0} \; \rightarrow \; \mathrm{{}_2^4 He} + \; \mathrm{{}_1^3 T} + \; \mathrm{n^0} \; - \; 2.47\ \mathrm{MeV}$$

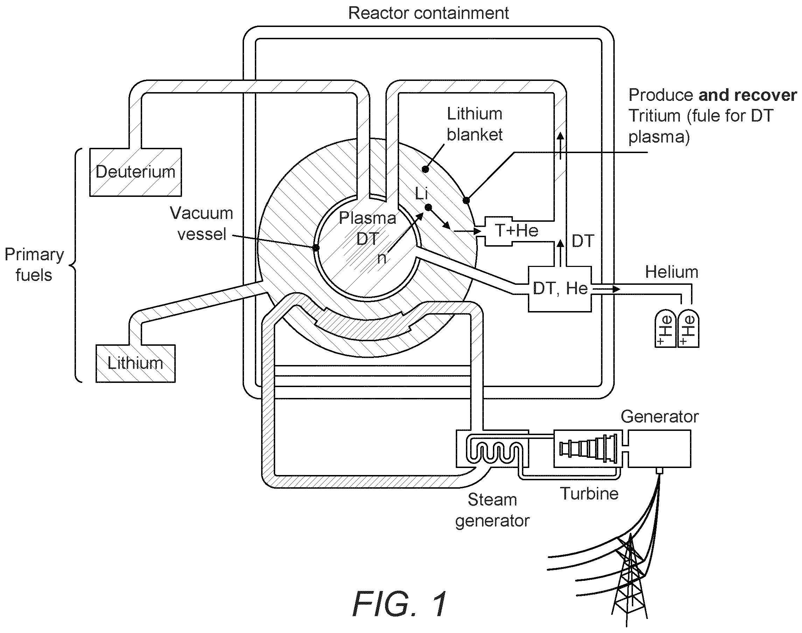

Fig. 1 is a depiction of a Tokamak nuclear fusion reactor set-up. A Tokamak nuclear fusion reactor set-up is used for illustration only. Other nuclear fusion reactor set-ups are possible. It comprises magnetically confined D-T plasma surrounded by a breeder blanket for breeding Tritium. The breeder blanket comprises a lithium-containing material that is exposed to the neutrons released during the D-T fusion reaction. The lithium-containing material can be a ceramic (such as e.g. $Li_2O$, $LiAlO_2$, $Li_2ZrO_3$, $Li_4SiO_4$), a liquid metal form (PbLi or SnLi alloys or pure Li), or a molten salt (such as $Li_2F\text{-}BeF_2$).

Breeder blankets functions and characteristics are not defined by the type of Tokamak device, but rather by the neutron flux, fluence, and energy spectrum generated by the fusion reaction. The parameter used to inform breeder blanket design is the Tritium breeding ratio (TBR), which is the ratio of the Tritium produced within the breeder blanket to the Tritium consumed by the fusion reaction. A TBR > 1.05 is required for a viable breeder blanket concept, with the extra > 5 % (as a minimum) being incorporated to compensate for Tritium losses in the system such as e.g. loss to the environment, radioactive decay, and extraction inefficiencies.

The nuclear fusion reactor set-up of Fig. 1 also comprises primary fuel sources such as a Deuterium source that provides further Deuterium to the D-T plasma, as well as a Lithium source that provides further Lithium to the breeder blanket (in the case where the breeder blanket contains a liquid form or a molten salt form of Lithium).

The nuclear fusion reactor set-up of Fig. 1 shows a Helium extraction system. This is optional.

In addition, a neutron multiplier material may be provided in the nuclear fusion reactor set-up of Fig. 1 to counter neutron leakage within the system (such as loss of neutrons via absorption in the structural materials). Common neutron multipliers include Beryllium, which is used when the energy of released neutrons is greater, then 5 MeV, as well as Lead, Tin, Uranium, Tungsten and transuranic elements. The typical neutron multiplier reaction is (n, 2n) for Lead, Tin, Tungsten or Beryllium. For Uranium/transuranic elements, the typical neutron multiplier reaction is (fission, Xn), where X is a number from 1 to 5 depending on the fissioning isotope. It should be noted that some elements listed have energy threshold reactions of (n, 2n), as tungsten E > 5 MeV.

A heat exchanger connected to a steam generator is also provided in the nuclear fusion reactor set-up of Fig. 1. The heat exchanger comprises pipes / tubes through which coolant material may flow, to extract heat from the Lithium blanket, which is directed to a steam generator to produce steam, and ultimately electrical power. Typical types of coolant material include a liquid breeding material (such as Pb-Li, Li, or molten salt), water, carbon dioxide gas, methane, liquid sodium or helium gas.

The use of liquid metal as a breeding material within fusion breeder blankets is an on-going area of scientific research. It is considered likely to be the most appropriate breeding material, due to the reduction in radioactive waste, increased plant availability, and ease of tritium breeding control when compared with solid breeders; the rate at which Tritium is to be produced in the blanket must be controlled with precision in order for fusion to become a reliable source of electricity. Furthermore, liquid breeding materials may also double up as a coolant for the nuclear fusion reactor, which eventually produces electricity via a steam turbine cycle.

Likely candidates for such cooling/breeding material are FLiBe ($Li_2BeF_4$), liquid metal Li, and liquid metal eutectic LiPb (17:83) (however, any combination of Li-Pb could be envisioned), both of which function well at atmospheric conditions (thus the structural forces are minimal), and at high temperatures (which implies high levels of efficiency and possibility of co-generation capabilities). FLiBe ($Li_2BeF_4$), Li, and LiPb (17:83), burn-up lithium at different rates (due to density differences) and produce varying amounts of impurities.

However, both FLiBe and LiPb (17:83 (eutectic)) pose major problems such as corrosion in the case of FLiBe ($Li_2BeF_4$), and dissolution in the case of Li and LiPb, both of which impact upon the viable containment of the cooling/breeding material in the breeder blanket. At temperatures above 450 °C, liquid LiPb, is a severely corrosive medium, especially for Chromia ($Cr_2O_3$)-forming austenitic steels. Furthermore, under neutron irradiation, high Chromium (Cr) concentrations (> 9 weight percentage (wt. %)) can result in severe aging embrittlement due to the formation of Cr rich $\alpha$'- and $\sigma$-phase precipitates for ferritic-based steels. For austenitic-based steels, neutron irradiation can also produce radiation-induced swelling between 400 - 600 °C. For FLiBe, the electronegative fluorine element reacts with Cr within structural materials (such as nickel-based and iron-based materials) and causes the Cr to leach out of the materials. This leaching effect (also called corrosion and/or dissolution) embrittles the material. Impurities, such as water, in FLiBe forms hydrogen fluoride (HF) which also attacks materials severely.

Raiman, Stephen S., and Sangkeun Lee. "Aggregation and Data Analysis of Corrosion Studies in Molten Chloride and Fluoride Salts." Journal of Nuclear Materials 511 (2018): 523-35 discusses the factors that affect corrosion in molten salts. It is reported that salt purity has the strongest correlation with corrosion rates in molten chlorides and fluorides. They also indicate that if purification of molten salts cannot be achieved to the level for minimal corrosion, then alternative methods should be investigated such as thermodynamically stable coatings.

CN111863286A describes a Beryllium-based liquid cladding based on a silicon carbide tube.

FDS Team et. al. "Fusion-based hydrogen production reactor and its material selection" Journal of Nuclear Materials 386-388 (2009): 122-126 discusses the fusion-based hydrogen production reactor (named FDS-III), one of the series of fusion system design concepts developed in China. In particular the paper provides conceptual designs of the FDS-III, including the design of plasma core, high temperature blanket, divertor and related auxiliary systems.

Morley N. B. et. Al. "Recent research and development for the dual-coolant blanket concept in the US" Fusion Engineering & Design 83 (2008); 920-927 discusses the state of dual-coolant lead-lithium (DCLL) development in the US including recent design modifications and results from recent R&D efforts. Such R&D includes the progress on development and property quantification of SiC/SiC composites and SiC foams as candidate flow channel insert (FCI) materials.

A new design of breeder blanket that avoids high levels of corrosion, aging embrittlement, and radiation embrittlement is needed, so that a duel functioning cooling/breeding material such as FLiBe and LiPb can be used. Such a breeder blanket design is envisaged to improve the overall functioning of the nuclear reactor, and increases the longevity of the breeder blanket.

Various embodiments and aspects of the present invention are described without limitation below, with reference to the accompanying figures.

**Summary of Invention**

Aspects of the invention are set out in the claims. According to a first aspect of the present invention, a breeder blanket for a plasma fusion reactor is provided, comprising: a front wall and steel conduits located on a side of the front wall opposite to a plasma. The steel conduits have first sections and second sections for circulation of liquid breeder material. The first sections are remote from the plasma and the second sections are proximate to the plasma. The steel of the second sections is enhanced with dispersed particles of oxide.

The steel of the first sections and the second sections of the steel conduits is alumina-forming steel, FeCrAl (preferably ferritic and/or martensitic steel).

It is preferred that the dispersed particles are predominantly smaller than 100nm in diameter, preferably smaller than 50nm in diameter, more preferably 5nm average in diameter. They may be nanoparticles of one or more oxides selected from the group: Yttrium oxide, $Y_2O_3$, Zirconium dioxide, $ZrO_2$, or mixtures thereof.

The steel of the first sections of the steel conduits preferably comprise, by weight %: 8.0 - 14.0 Chromium, Cr; 3.0 - 6.0 Aluminium, Al; 0.5 - 2.0 Molybdenum, Mo; 0.5 - 1.1 Niobium, Nb; 0.1 - 0.2 Titanium, Ti, and less than 0.02 of each of Carbon, C, and Nitrogen, N. The remaining balance comprises Iron, Fe.

More preferably, the steel of the first sections of the steel conduits comprise, by weight %: 8.5 - 9.5 Cr. 5.0 - 6.0 Al. 1.1 - 1.5 Mo;. 0.9 - 1.1 Nb; and 0.125 - 0.175 Ti.

Preferably, the steel of the second sections of the steel conduits comprises, by weight %, prior to consolidation: 8.0 - 14.0 Cr; 3.0 - 6.0 Al; 0.5 - 2.0 Mo; 0.5 - 1.1 Nb; 0.1 - 0.2 Ti; 0.1 - 0.5 Yttrium oxide, $Y_2O_3$, and less than 0.02 of each of C, and N. The remaining balance comprises Fe.

More preferably, the steel of the second sections comprises, by weight %, prior to consolidation: 8.5 - 9.5 Cr; 5.0 - 6.0 Al; 1.1 - 1.5 Mo; 0.9 - 1.1 Nb; 0.125 - 0.175 Ti and 0.25 - 0.3 $Y_2O_3$.

The steel of the second sections of the steel conduits may further comprise 0.2 - 0.5% Zirconium, Zr, by weight prior to consolidation.

The steel conduits may be tubes or pipes that are arranged in the breeder blanket to run parallel to a flux of neutrons from the plasma, and/or tubes or pipes that are arranged in the breeder blanket to run perpendicular to a flux of neutrons from the plasma. I.e., the predominantly arrangement may be such that the flux runs mainly along the tubes/pipes or such that the tubes/pipes cross the flux. The latter arrangement is good in the region closer to the plasma, for blocking the flux. There may be different arrangements in different regions.

The ratio of a length of the first sections of the steel conduits to a length of the second sections of the steel conduits is preferably greater than 1.

As an alternative to tubes/pipes, the steel conduits may form a hollow parallelepiped or box or similar shape. In this case, the ratio of a length of the first sections of the steel conduits to a length of the second sections of the steel conduits is preferably less than 1. There may be one or more baffles inside the box to force flow of breeder material to pass around the baffles, for more complete flow throughout the box and to avoid dead spaces of static breeder material.

The second sections of the steel conduits may comprise a weld region where the second sections and the first sections of the steel conduits are connected together. The weld region is depleted of the dispersed particles of oxide relative to the second sections, which have a generally uniform distribution of oxide particles. The above arrangements may be components of a system for breeding tritium fuel. The system has steel pipework for directing liquid breeder material from the breeder blanket to a heat exchanger, a purification system and a tritium extraction system before returning the liquid breeder material to the breeder blanket. The material used for this pipework is preferably alumina-forming ferritic martensitic steel.

The liquid breeder material may be a molten mixture of Lithium fluoride, LiF, and Beryllium fluoride, $BeF_2$. Alternatively, it may be Pb-Li eutectic alloy or other Pb-Li alloy or Lithium-Tin alloy.

A method of constructing a breeder blanket for a plasma fusion reactor is also provided. The method comprises: forming, by pilgering, first sections of the steel conduits from alumina-forming ferritic martensitic steel; forming, by extrusion, second sections of the steel conduits from oxide dispersion strengthened, ODS alumina-forming ferritic steel having dispersed particles of oxide; welding the second sections to the first sections; and securing, to the side of the steel conduits, a front wall.

The first sections and the second sections are preferably welded together using friction stir welding.

**Brief description of the drawings**

Fig. 1 depicts 1 a Tokamak nuclear fusion reactor set-up.

Fig. 2 depicts a cross-section of a torodial Tokamak nuclear fusion reactor.

Fig. 3a depicts a view of a first embodiment of a nuclear fusion breeder blanket 300 in the Y-Z plane.

Fig. 3b depicts the nuclear fusion breeder blanket 300 of Fig. 3a in the X-Y plane.

Fig. 3c depicts the nuclear fusion breeder blanket 300 of Fig. 3a in the X-Z plane.

Fig. 4a depicts a view of a second embodiment of a nuclear fusion breeder blanket 400 in the Y-Z plane.

Fig. 4b depicts the nuclear fusion breeder blanket module 400 of Fig. 4a in the X-Y plane.

Fig. 4c depicts the nuclear fusion breeder blanket module 400 of Fig. 4a in the X-Z plane.

Fig. 5a depicts a view of a third embodiment of a nuclear fusion breeder blanket 500 in the Y-Z plane.

Fig. 5b depicts the nuclear fusion breeder blanket 500 of Fig. 5a in the X-Y plane.

Fig. 5c depicts the nuclear fusion breeder blanket 500 of Fig. 5a in the X-Z plane.

Fig. 6 depicts a system for breeding tritium fuel for use in a nuclear fusion reactor.

Fig. 7 depicts the steps of a method of constructing a breeder blanket for a plasma fusion reactor comprising steel conduits for circulation of liquid breeder material.

## Detailed description

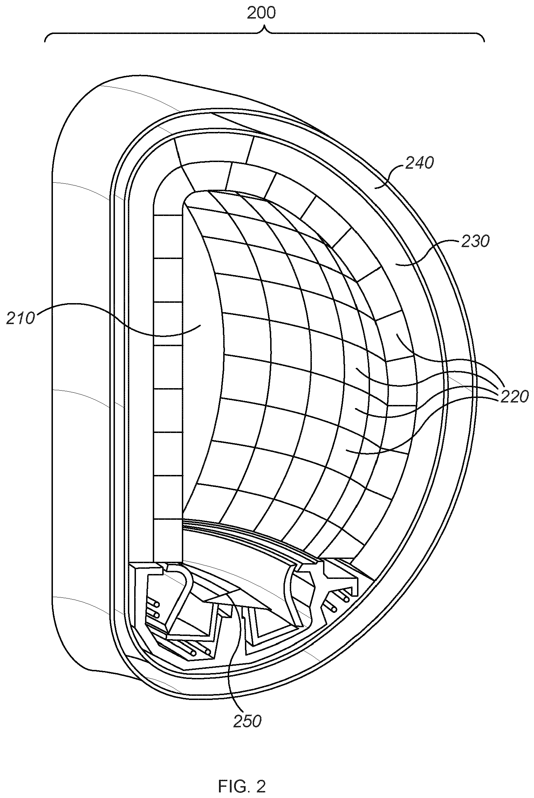

Fig. 2 depicts, for illustration only, a cross-section of a torodial Tokamak nuclear fusion reactor 200. The cross-section of the Tokamak nuclear fusion reactor reveals a hollow central portion 210 called the vacuum chamber, and a plurality of tiles 220 that cover the inner surface of the Tokamak. Each of those tiles is a breeder blanket. Accordingly, the inner surface of the Tokamak is covered by a plurality of breeder blankets.

Neutron and gamma-ray shielding materials 230 are provided on the other side of the breeder blanket and the whole structure is encased in a double-walled vacuum vessel 240 made of steel. The shielding material 230 protects the vacuum vessel, 240. The double-walled vacuum vessel 240 forms the boundary between the plasma vacuum chamber 210 with its breeder blankets, and the rest of the plant. Divertors 250 extract heat and ash (Helium ash) produced by the fusion reaction, minimise plasma contamination, and assist with plasma control.

Various embodiments and aspects of a new design of nuclear fusion breeder blanket follows.

Alumina ($Al_2O_3$)-forming ferritic Fe-Cr-Al-based alloys (FeCrAl) have superior oxidation properties at temperatures above 1000 °C in air, and have also shown interesting corrosion properties in liquid Li and LiPb at temperatures up to 600 °C. Ferritic steels also have superior radiation-induced swelling resistance and helium-embrittlement compared to austenitic steels and nickel-based materials.

A new design of breeder blanket is proposed that takes advantages of the interesting corrosion properties of Alumina ($Al_2O_3$)-forming ferritic Fe-Cr-Al-based alloys (FeCrAl).

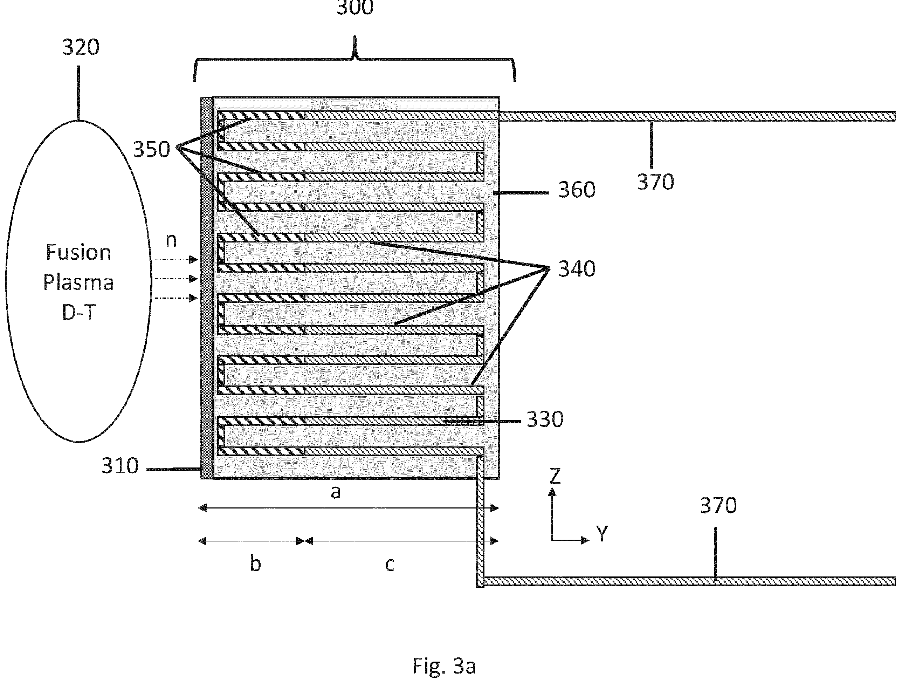

Fig. 3a depicts a view of a nuclear fusion breeder blanket 300 in the Y-Z plane (a side view of the nuclear fusion breeder blanket 300). The breeder blanket 300 has a front wall 310 on a side of the breeder blanket 300 proximate to the fusion plasma 320 of the nuclear fusion reactor, when in use. The nuclear fusion breeder blanket 300 includes steel conduits located on a side of the front wall 310 opposite to a side proximate to the fusion plasma. The steel conduits 330 comprise first sections 340 and second sections 350. The second sections 350 are proximate to the fusion plasma 320 and the front wall 310. The first sections 340 are remote from the fusion plasma 320 and the front wall 310. The first sections at least are supported by a steel support structure 360. The second sections may also be supported by the same steel support structure or a special steel support structure or may be supported by the first sections.

External to the nuclear fusion breeder blanket 300 there are provided steel pipes/tubes 370 that are connected to, or integrally formed with, first sections 340 of at least two of the steel conduits 330 of the nuclear fusion breeder blanket 300.

The front wall 310 of the nuclear fusion breeder blanket 300 is a wall that separates the fusion plasma 320 of the nuclear fusion reactor from the steel conduits of the nuclear fusion breeder blanket 300. The front wall 310 is formed from a material that is permeable to neutrons, to facilitate a flux of neutrons passing from the fusion plasma 320 through the nuclear fusion breeder blanket 300, including the steel conduits 330. The material used to form the front wall 310 is preferably an oxide-dispersed strengthened (ODS) steel.

The plasma-facing side of the front wall 310 has a component formed of tungsten, molybdenum (or a mixture thereof), or a material that possesses a high plasma sputtering threshold (e.g. similar to the threshold for those elements) which is suitable for fusion facing environments.

ODS steels are steels that comprise a metal matrix with small oxide particles dispersed within. Examples of ODS steels include, but are not limited to the super alloy MA956, as well as MA957, 14YWT, 12YWT, EUROFER-ODS, F82HODS, and PM2000.

Advantageously, by using an ODS steel for the front wall 310, it suffers less neutron irradiation damage over its lifetime due to the material's superior radiation resistance, than if it were made of a non-ODS steel. Additionally, by using an ODS steel, the front wall 310 advantageously suffers less hydrogen and helium embrittlement over its lifetime, than if it were made of a non-ODS steel.

A length (a) of the nuclear fusion breeder blanket 300 from a side of the front wall 310 closest to the fusion plasma to the furthest opposite side of the fusion breeder blanket 300 is between 50 cm - 250 cm. Preferably, the length (a) of the nuclear fusion breeder blanket 300 is 75 cm - 125 cm.

The steel conduits 330 comprising the first sections 340 and second sections 350 are made from at least two different materials. The first sections 340 and the second sections 350 of each of the plurality of steel conduits are connected together to form an integral steel conduit comprising the at least two different materials. They are preferably connected together using welding techniques. The steel conduits 330 are connected together using welding techniques such as fiction-stir welding.

Once connected together, the plurality of steel conduits 330 form a serpentine or coil or labyrinth (generally an "array") of connected steel conduits through which a liquid breeder material can flow. As depicted in Fig. 3a the array of the plurality of steel conduits 330 may form a serpentine-like structure that allows a liquid breeder material to flow from the bottom of the breeder blanket to the top of the breeder blanket.

As an example, the liquid breeder material used may be a molten mixture of lithium fluoride (LiF) and beryllium fluoride, ($BeF_2$). As an alternative example, the liquid breeder material is used may be a molten lithium or liquid lead-lithium (Pb-Li) eutectic or any combination of Pb-Li percentages. The eutectic alloy combination is preferred, because it has a single phase and the lowest melting temperature, but other proportions can be used. Other molten lithium salt mixtures or other molten alloys of lithium are also possible.

The first sections 340 of each of the plurality of steel conduits 330 are formed from alumina-forming ferritic steel, such as e.g. iron-chromium-aluminium (FeCrAl) alloys. The composition FeCrAl alloys of the first sections of each of the plurality of steel conduits 330 may comprise, in addition to iron (Fe), chromium (Cr), and aluminium (Al), other elements such as tungsten (W), Titanium (Ti), Carbon (C), and Nitrogen (N). The composition of the FeCrAl alloys of the first sections of each of the plurality of steel conduits 330 may further comprise other elements in addition to those already listed such as e.g. Molybdenum (Mo) and Niobium (Nb).

The FeCrAl alloy of the first sections 340 of the steel conduits 330 may comprises, by weight (wt) %: 8.0 - 14.0 Cr, 3.0 - 6.0 Al, 0.5 - 2.0 Mo, 0.5 - 1.1 Nb, 0.1 - 0.2 Ti, and less than 0.02 of each of C and N, and the remaining balance of the wt. % comprises Fe.

Advantageously, by limiting the Cr in the composition of the first sections 340 of the steel conduits 330 to a wt. % of Cr 8-14 the formation of the embrittling Cr-rich rich $\alpha$'- and $\sigma$-phase precipitates under neutron irradiation at intermediate temperature (250 - 550 °C) is mitigated.

Preferably the FeCrAl alloy of the first sections of the steel conduits comprises by wt. %: 8.5 - 9.5 Cr, 5.0 - 6.0 Al, 1.1 - 1.5 Mo, 0.9 - 1.1 Nb, 0.125 - 0.175 Ti. In addition, the FeCrAl alloy of the first sections of the steel conduits further comprises by wt. %: less than 0.02 of each of C and N, and the remaining balance of the wt. % comprises Fe.

Advantageously, by making the first sections 340 of the steel conduits from the above compositions a sufficient amount of Al is provided in the FeCrAl alloy to allow the formation of Alumina ($Al_2O_3$) when the Al reacts with Oxygen (O) during manufacturing. Formation of $Al_2O_3$ in the FeCrAl improves its temperature resistance, which is important given the high temperatures of the liquid breeder material e.g. LiF and $BeF_2$, or, Li, or Pb-Li eutectic alloy ,that flows through the steel conduits 330 of the breeder blanket 300. This advantageously increasing the longevity of the first sections of the steel conduits.

Advantageously, by making the first sections 340 of the steel conduits from the above compositions of FeCrAl alloy a more robust steel is provided in the breeder blanket. $Al_2O_3$ coatings possess superior hydrogen/deuterium/tritium barrier properties, such as a low permeation and diffusivity kinetics, and a low solubility. This feature provides exceptional performance in tritium management within the breeder blanket system.

Advantageously, by making the first sections 340 of the steel conduits from the above compositions of FeCrAl alloy a more robust steel is provided in the breeder blanket. The addition of Mo into the FeCrAl alloy improves its resistance to corrosion caused by the liquid breeder material. The addition of Nb results in the formation of Niobium nitrides and Niobium carbides in the FeCrAl alloy, improving the alloy's high temperature creep resistance. The addition of Ti results in the formation of Titanium nitrides and Titanium carbides in the FeCrAl alloy, improving the alloy's irradiation resistance and high temperature creep resistance. All of these additions advantageously increase the longevity of the first sections 340 of the steel conduits 330.

Alternatively, the FeCrAl alloy of the first sections 340 of the steel conduits 330 may comprises, by wt. %: 8.0 - 25.0 Cr, 2.0 - 6.0 Al, 0.1 - 3.0 Mo, 0.1 - 2.0 Nb, < 0.01 - 1.0 Ti, < 0.001 - 0.2 C and less than 0.02 of N, and the remaining balance of the wt. % comprises Fe.

Each of the first sections 340 of the steel conduits 330 has a length (c) that can range between: 25.0 - 170.0 cm.

The second sections 350 of each of the plurality of steel conduits 330 are formed from oxide strengthened FeCrAl, such as e.g. oxide-dispersed strengthened (ODS) FeCrAl steel. The composition of the oxide strengthened FeCrAl alloys of the second sections 350 of each of the plurality of steel conduits 330 may comprise, in addition to Fe, Cr, and Al, other elements such as tungsten (W), Ti, C, and N. The composition of the oxide strengthened FeCrAl alloys of the second sections 350 of each of the plurality of steel conduits 330 may further comprise other elements in addition to those already listed such as e.g. Mo, Nb, and Yttrium oxide ($Y_2O_3$).

The FeCrAl alloy of the second sections 350 of the steel conduits 330 may comprise, by wt. %: 8.0 - 14.0 Cr, 3.0 - 6.0 Al, 0.5 - 2.0 Mo, 0.5 - 1.1 Nb, 0.1 - 0.2 Ti, 0.1 - 0.5 $Y_2O_3$, and less than 0.02 of each of C and N, and the remaining balance of the wt. % comprises Fe. These are the preferred percentages of the components of the steel prior to consolidation. The steel is preferably subjected to a diffusionless transformation process, e.g. into martensitic steel, which may cause slight changes in the composition (e.g. in the levels of carbon and oxide).

Preferably the FeCrAl alloy of the second sections 350 of the steel conduits 330 comprises by wt. %: 8.5 - 9.5 Cr, 5.0 - 6.0 Al, 1.1 - 1.5 Mo, 0.9 - 1.1 Nb, 0.125 - 0.175 Ti, and 0.25 - 0.3 $Y_2O_3$. In addition, FeCrAl alloy of the second sections of the steel conduits further comprises by wt. %: less than 0.02 of each of C and N, and the remaining balance of the wt. % comprises Fe. These are the preferred percentages of the components of the steel prior to consolidation. The steel is preferably subjected to a diffusionless transformation process, e.g. into martensitic steel, which may cause slight changes in the composition (e.g. in the levels of carbon and oxide).

The dispersed particles of $Y_2O_3$ in the second sections 350 of the steel conduits 330 are preferably nanoparticles of $Y_2O_3$. These are predominantly smaller than 100 nm in diameter on average, preferably smaller than 50nm in diameter on average, and more preferably about 5 nm diameter on average. It will be understood that the final form of those yttrium-containing nanoparticles may have a different stoichiometry or composition.

By making the second sections 350 of the steel conduits from the above compositions of FeCrAl alloy, the second sections 350 benefit from the same advantages as the first sections 340 of the steel conduits.

Advantageously, by including $Y_2O_3$ in the composition of the second sections 350 of the steel conduits 330, the second sections 350 benefit from greater radiation resistance, greater helium-embrittlement resistance, improved mechanical strength such as yield stress, and high temperature strength, than the first section 340.

The FeCrAl alloy of the second sections 350 of the steel conduits 330, may further comprises, by wt. %: 0.2 - 0.5 Zirconium (Zr). This is the preferred percentages of the components of the steel prior to consolidation. The steel is preferably subjected to a diffusionless transformation process, e.g. into martensitic steel, which may cause slight changes in the composition (e.g. in the levels of carbon and oxide).

Advantageously, by including Zr in the composition of the second sections 350 of the steel conduits 330, the second sections 350 also benefit from greater radiation resistance and high temperature strength, than the first section 340. Zr additions refine the yttrium-based particles by increasing the oxide particle number density and reducing the average mean particle size.

Each of the second sections 350 of the steel conduits 330 have a length (b) that can range between: 16.0 - 125.0 cm.

The length of the first sections 340 (c) of the steel conduits 330 should be greater than the length of the second section 350 (b) of the steel conduits 350, such that the ratio between the length of the first sections 340 (c), and the length of the second sections 350 (b) of each of the steel conduits 350 is greater than one.

Once formed, each of the steel conduits 330 comprise the first section 340 and the second section 350 as described previously, which are welded together at a weld region using friction stir welding techniques.

By using friction stir welding techniques, the weld region of the steel conduits 330 are connected together will be depleted of the dispersed particles of oxide (e.g. the dispersed particles of $Y_2O_3$). The dispersed particles of oxide in the second sections 350 of the steel conduits 330, outside of the weld region, remain uniformly distributed. This advantageously results in the second sections 350 of the steel conduits 330, outside of the weld region, retaining the benefits of the oxide dispersion such as radiation resistance and high temperature strength.

At least two steel pipes / tubes 370 are connected to, or integrally formed with, the first sections 340 of at least two (the first and last) of the steel conduits 330 of the nuclear fusion breeder blanket 300. Those steel pipes / tubes 370 are preferably formed of the same FeCrAl alloy as the first sections 340 of the steel conduits 330.

One of the steel pipes / tubes 370 is preferably connected to, or integrally formed with the first section 340 of one steel conduit 330 at the top of the nuclear fusion breeder blanket at one side, and the other steel pipe / tube 370 is preferably connected to, or integrally formed with the first section 340 of one steel conduit 330 at the bottom of the nuclear fusion breeder blanket at the other side (e.g. top left to bottom right or vice-versa). Other arrangements are possible, including several inlet pipes with a manifold and/or several outlet pipes with a manifold.

By connecting the steel pipes / tubes 370 to, or integrally forming them with, the first sections 340 of at least two of the steel conduits 330, the liquid breeder material can be fed into the breeder blanket 300 via one of the at least two steel pipes / tubes 370, and extracted from the breeder blanket 300 via the other.

A support structure 360 is provided in the breeder blanket 300 to support the steel conduits 330. The support structure 360 may comprise a plurality of struts, stays, crosspieces or the like, or scaffolding, mesh or the like extending, in each case, the length (a) of the breeder blanket. Alternatively, the support structure 360 may comprise a plurality of such elements that extend from a side of the breeder blanket opposite to the front wall 310, toward the front wall 310 up to, and preferably including, the weld region where the first sections 340 and the second sections 350 of the steel conduits 330 are connected together. This latter arrangement obviates the need for highly radiation resistant steel in the region (b) closer to the front wall and the plasma. In such a case, the support structure can be made of the same steel as the first sections 340 (or can be made of lower grade steel, as there is no direct exposure to the lithium breeder material). The sections 350 can be supported by their welds to the first sections 340 or can be supported by alternative supports selected for high neutron resistivity.

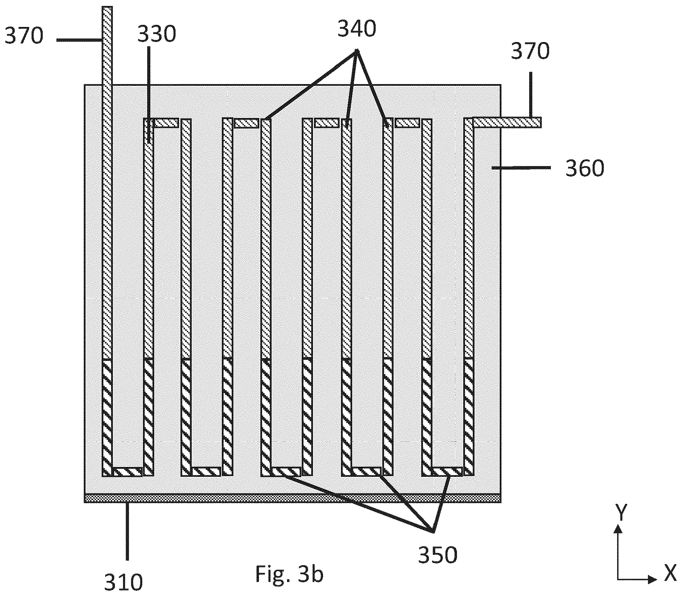

Fig. 3b depicts the nuclear fusion breeder blanket module 300 of Fig. 3a in the X-Y plane (a top-down view of the nuclear fusion breeder blanket 300).

In the X-Y plane, the breeder blanket of Fig. 3a is depicted as also having a plurality of steel conduits 330 comprising the first sections 340 and the second sections 350 previously described, wherein the steel conduits 330 extend in the X-Y plane. The second sections 350 are proximate to the fusion plasma 320 and the front wall 310. The first sections 340 are remote from the fusion plasma 320 and the front wall 310.

Figs. 3a & 3b reveal that the breeder blanket 300 comprises a three-dimensional (3-D) array of steel conduits 330, each comprising the first sections 340 and the second sections 350 as previously described. The 3-D array extends in both the Y-Z plane (Fig. 3a) and the X-Y plane (Fig. 3b).

A first section 340 of at least one of the plurality of steel conduits 330 in the Y-Z plane (Fig. 3a) is connected to another first section 340 of at least one of the plurality of steel conduits 330 in the X-Y plane (Fig. 3b), to allow liquid breeder material to flow across the breeder blanket in a left-right direction as shown, i.e. into the X-Y plane.

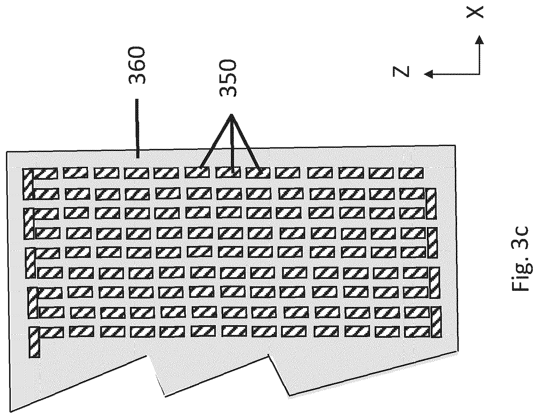

Fig. 3c depicts a portion of the nuclear fusion breeder blanket module 300 of Fig. 3a & 3b in the X-Z plane (the nuclear fusion breeder blanket module 300 viewed from the plane of the front wall 310). Fig. 3c depicts the X-Z plane of the 3-D array of steel conduits 330.

In the embodiment of Figs. 3a-3c the steel conduits 330 may be tubes or pipes, which are arranged to run parallel to the direction of flux of neutrons from the fusion plasma, when the breeder blanket 400 is installed in a nuclear reactor.

The embodiment of Figs. 3a-3c advantageously has approximately equal numbers of bends in the ODS steel sections and the non-ODS steel sections. The extruded ODS steel can be formed with right-angle and U-turn bends, as shown, but it is easier to form bends in the non-ODS steel. Thus, the Fig. 3 arrangement may be advantageous when (b) and (c) are similar lengths or even when (b) is larger than (c).

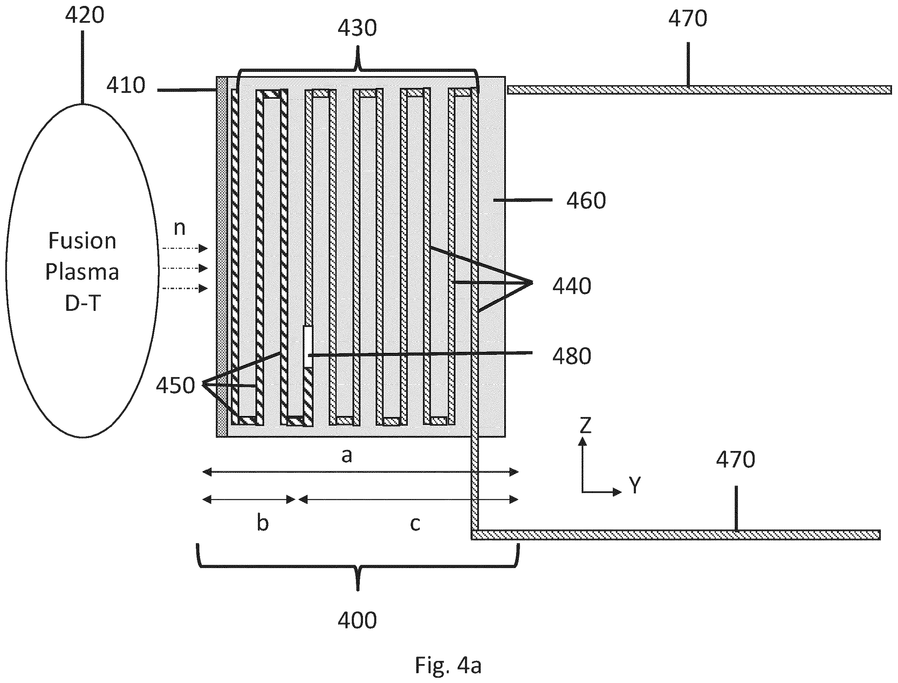

Fig. 4a depicts an alternative embodiment of a nuclear fusion breeder blanket 400 in the Y-Z plane (a side view of the nuclear fusion breeder blanket module 400). The breeder blanket 400 includes a front wall 410 proximate to the fusion plasma 420 of the nuclear fusion reactor when installed. Similarly to the nuclear fusion breeder blanket 300 of Figs. 3a-3c, the nuclear fusion breeder blanket 400 also includes a plurality of steel conduits 430 comprising first sections 440 and second sections 450 supported by a steel support structure 460. The second sections 450 are proximate to the fusion plasma and the front wall 410, and together extend a length (b) of the nuclear fusion breeder blanket 400 in the Y direction, The length (b) extends from a region of the nuclear fusion breeder blanket 400 proximate to the fusion plasma and the front wall 410, to a region away from the fusion plasma 420 and the front wall 410. The first sections 440 of the steel conduits 420 are remote from the fusion plasma and the front wall 410, and extend for a length (c) of the nuclear fusion breeder blanket 400, away from the first sections and towards the fusion plasma and the front wall 410 in the Y direction. External to the nuclear fusion breeder blanket 400 there are provided steel pipes/tubes 470 that are connected to, or integrally formed with, first sections 440 of at least two of the steel conduits 430 of the nuclear fusion breeder blanket 400,

As with the front wall 310 above, the front wall 410 separates the fusion plasma of the nuclear fusion reactor from the plurality of steel conduits 430 of the nuclear fusion breeder blanket 400 and is formed from a material that is permeable to neutrons. The material used to form the front wall 410 is preferably an oxide-dispersed strengthened (ODS) steel with a plasma-facing component formed of either tungsten, molybdenum, or some similar material suitable for fusion facing environments. The front wall 410 may benefit from the same advantages as the front wall in the first embodiment (i.e. the front wall 310 of the nuclear fusion breeder blanket 300). A length (a) of the nuclear fusion breeder blanket 400 from a side of the front wall 410 closest to the fusion plasma to the furthest opposite side of the fusion breeder blanket 400 is between 50 cm - 250 cm. Preferably, the length (a) of the nuclear fusion breeder blanket 400 is 75 - 125 cm.

The plurality of steel conduits 430 of the nuclear fusion breeder blanket 400 is located proximate to the fusion plasma. The steel conduits 430 comprise first sections 440 and second sections 450, wherein the first sections 440 and the second sections 450 are made from at least two different materials connected together to form an integral steel conduit. The first sections 440 and the second sections 450 of each of the plurality of steel conduits 430 are connected together by welding, preferably fiction-stir welding.

As with the steel conduits 330 above, the plurality of steel conduits 430 form an array of connected steel conduits through which a liquid breeder material can flow. As depicted in Fig. 4a the array may form a snake-like, coil or other labyrinth structure that allows a liquid breeder material to flow left-to-right (or right-to-left) in the breeder blanket.

The first sections 440 of each of the plurality of steel conduits 430 are formed FeCrAl alloys. The composition of the FeCrAl alloys of the first sections of each of the plurality of steel conduits 430 may comprise the same composition as in the first embodiment (i.e. the same composition as the first sections 340 of each of the plurality of steel conduits 330).

The first sections 440 of each of the plurality of steel conduits 430 may also benefit from the same advantages as the plurality of steel conduits in the first embodiment (i.e. the first sections 340 of each of the plurality of steel conduits 330).

The first sections 440 of the steel conduits 430 extend a length (c) of the nuclear fusion breeder blanket that can range between: 25.0 - 170.0 cm.

The second sections 450 of each of the plurality of steel conduits 430 are formed from oxide strengthened FeCrAl, such as e.g. ODS FeCrAl steel. The composition of the oxide strengthened FeCrAl alloys of the second sections 450 of each of the plurality of steel conduits 430 may comprise the same composition as in the first embodiment (i.e. the same composition as the second sections 350 of each of the plurality of steel conduits 330).

The second sections 450 of each of the plurality of steel conduits 430 may also benefit from the same advantages as the plurality of steel conduits in the first embodiment (i.e. the second sections 350 of each of the plurality of steel conduits 330).

The second sections 450 of the steel conduits 430 extend a length (b) of the breeder blanket 400 that can range between: 16.0 - 125.0 cm.

The length extended by the first sections 440 (c) of the steel conduits 430 should be greater than the length extended by the second sections 450 (b) of the steel conduits 450, such that the ratio between the length (c), and the length (b) of each is greater than one.

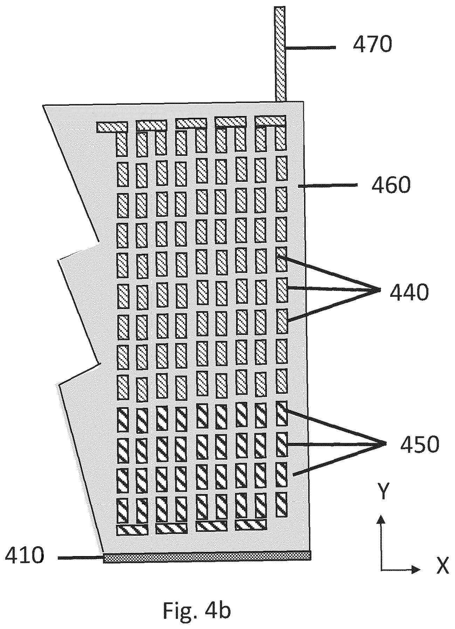

Once formed, the first sections 440 of the steel conduits 430 and the second sections 450 of the steel conduits are welded together at a weld region 480 (see Fig. 4b). In particular the first section 440 and the second section 450 of each of the steel conduits 330 are welded together using friction stir welding techniques.

By welding the first sections 440 and the second sections 450 of the steel conduits 430 together using friction steel welding, a weld region 480 where the first sections 440 and the second sections 450 of the steel conduits 430 are connected together will be depleted of the dispersed particles of oxide (e.g. the dispersed particles of $Y_2O_3$).

The dispersed particles of oxide (e.g. the dispersed particles of $Y_2O_3$) in the second sections 450 of the steel conduits 430, outside of the weld region, remain uniformly distributed. This advantageously, results in the second sections 450 of the steel conduits 430, outside of the weld region, retaining the benefits of the oxide dispersion such as e.g. radiation resistance and high temperature strength.

As before, at least two steel pipes / tubes 470 are connected to, or integrally formed with, the first sections 440 of at least two of the steel conduits 430 of the nuclear fusion breeder blanket 400. Those steel pipes / tubes 470 are preferably formed of the same FeCrAl alloy of the first sections 440 of the steel conduits 430.

A support structure 460 is provided in the breeder blanket 400 to support the steel conduits 430 similar to support structure 360 of Fig. 3.

Fig. 4b depicts a portion of the nuclear fusion breeder blanket module 400 of Fig. 4a in the X-Y plane (a top-down view of the nuclear fusion breeder blanket 400).

In the X-Y plane, the breeder blanket of Fig. 4a is depicted as also having a plurality of steel conduits 430 comprising the first sections 440 and the second sections 450 previously described, wherein the steel conduits 430 extend in a Y direction. The second sections 450 are proximate to the fusion plasma and the front wall 410. The first sections 440 are remote from the fusion plasma 420 and the front wall 410. External to the nuclear fusion breeder blanket 400 there are provided steel pipes/tubes 470 that are connected to, or integrally formed with, first sections 440 of at least two of the steel conduits 430 of the nuclear fusion breeder blanket 400.

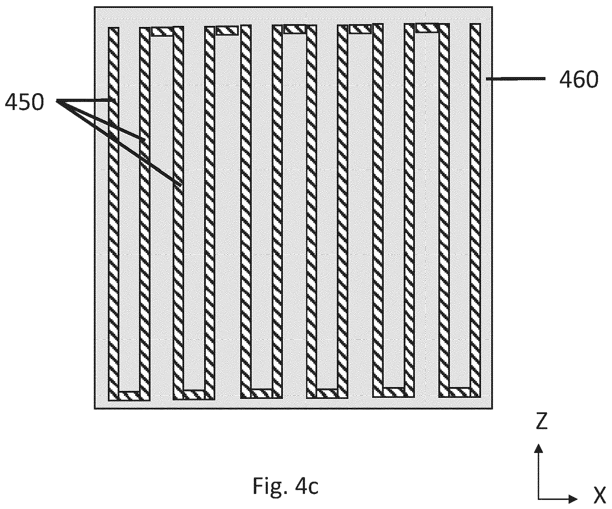

Figs. 4a & 4b reveal that the breeder blanket 400 comprises a three-dimensional (3-D) array of steel conduits 430, each comprising the first sections 440 and the second sections 450 as previously described. The 3-D array extends in both the Y-Z plane (Fig. 4a) and the X-Y plane (Fig. 4c).

Fig. 4c depicts the nuclear fusion breeder blanket module 400 of Fig. 4a & 4b in the X-Z plane (the nuclear fusion breeder blanket module 400 viewed from the front wall 410). Fig. 4c depicts the X-Z plane of the 3-D array of steel conduits 430.

In the embodiment of Figs. 4a-4c the steel conduits 430 may be tubes or pipes, which are arranged to run perpendicular to the direction that a flux of neutrons will flow from the fusion plasma, when the breeder blanket 400 is installed in a nuclear reactor.

The embodiment of Figs. 4a-4c benefits from the same advantages as the embodiment of Figs. 3a-3c. In addition, the embodiment of Figs. 4a-4c advantageously has fewer welds that than of Figs. 3a-3c on account of the orientation and arrangement of the steel conduits. This has the possibility of making it easier to manufacture. The Fig. 4 arrangement may, depending on the relative dimensions, require fewer bends in the second (ODS) sections. In the illustrated examples, when the length (c) exceeds the length (b), it can be preferable to adopt the Fig. 4 arrangement.

As an example, in operation the liquid breeder material flows through the steel conduits 320, 420 of the nuclear fusion breeder blanket 300, 400. Preferably, the liquid breeder material is fed into the breeder blanket 300, 400 via a steel pipe / tube 370, 470 connected to, or integrally formed with, a first section 340, 440 of a steel conduit 330, 430 located at the bottom of the nuclear fusion breeder blanket.

As an example, in the embodiment of Figs. 3a-3c, the liquid breeder material flows up the nuclear fusion breeder blanket 300 through the steel conduits 320 to the top of the nuclear fusion breeder blanket. Once at the top of the nuclear fusion breeder blanket the liquid breeder material flows in a left-right direction i.e. in the Y direction, to a first section 330 of another steel conduit 320 at the top of the nuclear fusion breeder blanket 300. Subsequently, the liquid breeder material flows down the breeder blanket through steel conduits 320 to the bottom of the nuclear fusion breeder blanket. This process repeats itself until the liquid breeder material reaches the last steel conduit 330 of the nuclear fusion breeder blanket 300. The last steel conduit 330 of the nuclear fusion breeder blanket 300 is another steel conduit 330 connected to, or integrally formed with, another a steel pipe / tube 370 located at the top of the nuclear fusion breeder blanket. The liquid breeder material exits the nuclear fusion breeder blanket via the another steel pipe / tube 370.

As an example, in the embodiment of Figs. 4a-4c, the liquid breeder material flows across the nuclear fusion breeder blanket 400 through the steel conduits 420, from the right of the nuclear fusion breeder blanket, away from the fusion plasma 410, to the left of the nuclear fusion breeder blanket toward the fusion plasma 410. Once proximate to the fusion plasma 410 the liquid breeder material flows in a back-forward direction i.e. in the Y direction, to a second section 430 of another steel conduit 420 of the nuclear fusion breeder blanket 300. Subsequently, the liquid breeder material flows from the left of the nuclear fusion breeder blanket proximate the fusion plasma 410, to right of the nuclear fusion breeder blanket away the fusion plasma 410. This process repeats itself until the liquid breeder material reaches the last steel conduit 430 of the nuclear fusion breeder blanket 400. The last steel conduit 430 of the nuclear fusion breeder blanket 400 is another steel conduit 430 connected to, or integrally formed with, another a steel pipe / tube 470 located at the top of the nuclear fusion breeder blanket. The liquid breeder material exits the nuclear fusion breeder blanket via the another steel pipe / tube 470.

It will be understood by a person skilled in the art that the specific direction in which the liquid breeder material flows through the nuclear fusion breeder blanket is not limited by the exemplar operations described above. For example, the liquid breeder material may enter the nuclear breeder blanket via the steel conduit 330, 430 connected to, or integrally formed with, the steel pipe / tube 370, 470 located at the top of the nuclear fusion breeder blanket, and exits the nuclear fusion breeder blanket via exits the steel pipe / tube 370, 470 located at the bottom of the nuclear fusion breeder blanket.

Similarly, it will be understood by a person skilled in the art that the liquid breeder material can alternatively flow in either a up-down direction, down-up direction, back-forward direction, forward-back direction, left-right direction or, right-left direction of the nuclear fusion breeder blanket.

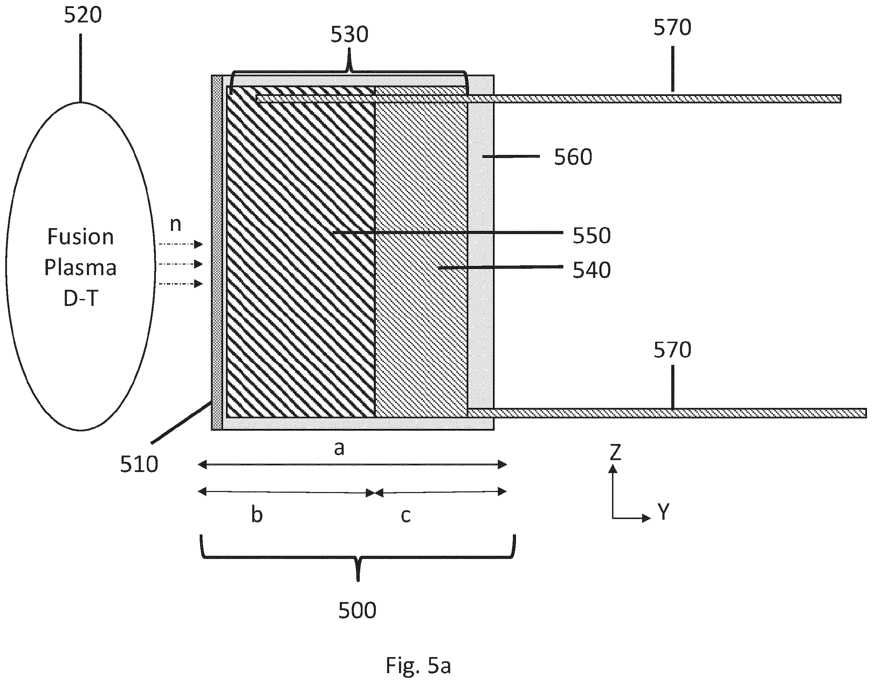

Fig. 5a depicts an alternative embodiment of a nuclear fusion breeder blanket 500 in the Y-Z plane (a side view of the nuclear fusion breeder blanket 500). The breeder blanket 500 includes a front wall 510. When the nuclear fusion breeder blanket 500 is incorporated into a nuclear fusion reactor the front wall is a wall on a side of the nuclear fusion breeder blanket 500 proximate to the fusion plasma 520 of the nuclear fusion reactor. The nuclear fusion breeder blanket 500 also includes steel conduits 530 comprising first sections 540 and second sections 550 supported by a steel support structure 560. The second sections 550 are proximate to the fusion plasma 520 and the front wall 510. The first sections 540 are remote from the fusion plasma 520 and the front wall 510. External to the nuclear fusion breeder blanket 500 there are provided steel pipes/tubes 570 that are connected to, or integrally formed with, first sections 540 of at least two of the steel conduits 530 of the nuclear fusion breeder blanket 500.

As with the front wall 310 & 410 above, the front wall 510 separates the fusion plasma of the nuclear fusion reactor from the plurality of steel conduits 530 of the nuclear fusion breeder blanket 500 and is formed from a material that is permeable to neutrons. The material used to form the front wall 510 is preferably an oxide-dispersed strengthened (ODS) steel, with a plasma-facing component formed of either tungsten, molybdenum, a mixture thereof or a material that have a high plasma sputtering threshold which is suitable for fusion facing environments. The front wall 510 may benefit from the same advantages as the front wall in the first and second embodiment (i.e. the front wall 310, 410 of the nuclear fusion breeder blanket 300, 400 respectively).

A length (a) of the nuclear fusion breeder blanket 500 from a side of the front wall 510 closest to the fusion plasma to the furthest opposite side of the fusion breeder blanket 500 is between 50 cm - 250 cm. Preferably, the length (a) of the nuclear fusion breeder blanket 500 is 20 - 30 cm.

The plurality of steel conduits 530 of the nuclear fusion breeder blanket 500 is located proximate to the fusion plasma. The steel conduits 530 comprise first sections 540 and second sections 550, wherein the first sections 540 and the second sections 550 are made from at least two different materials connected together to form an integral steel conduit. The first sections 540 and the second sections 550 of each of the plurality of steel conduits 530 are connected together by welding, preferably fiction-stir welding.

Each of the plurality of steel conduits 530 are connected together using welding techniques such as friction stir welding. Once connected together, each of the plurality of steel conduits 530 form tub through which a liquid breeder material can flow. For example, each of the plurality of steel conduits 530 may be a hollow parallelepiped.

The first sections 540 of each of the plurality of steel conduits 530 are formed FeCrAl alloys. The composition of the FeCrAl alloys of the first sections of each of the plurality of steel conduits 530 may comprise the same composition as in the first and second embodiment (i.e. the same composition as the first sections 340, 440 of each of the plurality of steel conduits 330, 430 respectively).

The first sections 540 of each of the plurality of steel conduits 530 may also benefit from the same advantages as the plurality of steel conduits in the first and second embodiment (i.e. the first sections 340, 440 of each of the plurality of steel conduits 330, 430 respectively).

The first sections 540 of the steel conduits 530 extend a length (c) of the nuclear fusion breeder blanket that can range between: 6.0 - 34.0 cm. Preferably, the first sections 540 of the steel conduits 530 extend a length (c) of the nuclear fusion breeder blanket that can range between: 13.0 - 20.0 cm.

The second sections 550 of each of the plurality of steel conduits 530 are formed from oxide strengthened FeCrAl, such as e.g. ODS FeCrAl steel. The composition of the oxide strengthened FeCrAl alloys of the second sections 550 of each of the plurality of steel conduits 530 may comprise the same composition as in the first and second embodiment (i.e. the same composition as the second sections 350, 450 of each of the plurality of steel conduits 330, 450 respectively).

The second sections 550 of each of the plurality of steel conduits 530 may also benefit from the same advantages as the plurality of steel conduits in the first and second embodiment (i.e. the second sections (350, 450 of each of the plurality of steel conduits 330, 430 respectively).

The second sections 550 of the steel conduits 530 extend a length (b) of the breeder blanket 400 that can range between: 3.0 - 17.0 cm. Preferably, the second sections 550 of the steel conduits 530 extend a length (b) of the nuclear fusion breeder blanket that can range between: 6.0 - 10.0 cm.

The length extended by the first sections 540 (c) of the steel conduits 530 should be less than the length extended by the second sections 550 (b) of the steel conduits 550, such that the ratio between the length (c), and the length (b) of each is less than one.

Once formed, the first sections 540 of the steel conduits 530 and the second sections 450 of the steel conduits are welded together at a weld region 580. In particular the first section 540 and the second section 550 of each of the steel conduits 530 are welded together using friction stir welding techniques.

By welding the first sections 540 and the second sections 550 of the steel conduits 530 together using friction stir welding, the weld region 580 benefits from the same advantages as the weld regions in the first and second embodiments (i.e. the weld region 380, 480 of each of the plurality of steel conduits 330, 430 respectively).

As before, at least two steel pipes / tubes 570 are connected to, or integrally formed with, the first sections 540 of at least two of the steel conduits 530 of the nuclear fusion breeder blanket 500. Those steel pipes / tubes 570 are preferably formed of the same FeCrAl alloy of the first sections 440 of the steel conduits 530.

Alternatively, at least one other steel pipe / tubes 570 is connected to, or integrally formed with, the second section 550 of each of the steel conduits 530 of the nuclear fusion breeder blanket 500 (shown in Figs. 5a-5c).

Advantageously, by configuring the steel pipes / tubes 570, such that at least one of the steel pipe / tubes 570 is connected to, or integrally formed with, the second section 550 of each of the steel conduits 530 of the nuclear fusion breeder blanket 500, the liquid breeder material can be fed into front of the breeder blanket 500 proximate to the fusion plasma 520.

A support structure 560 is provided in the breeder blanket 500 to support the steel conduits 430 similar to support structure 360, 460 of Fig. 3 and Fig. 4 respectively.

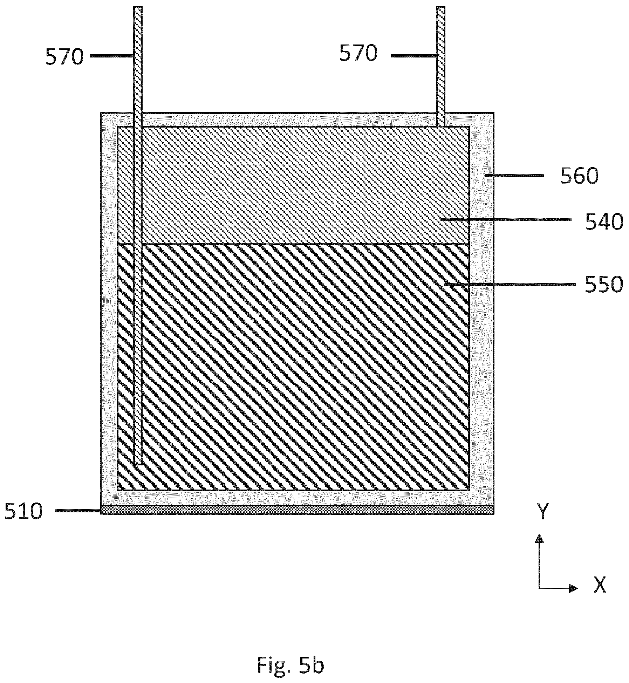

Fig. 5b depicts the nuclear fusion breeder blanket 500 of Fig. 5a in the X-Y plane (a top-down view of the nuclear fusion breeder blanket 500).

In the X-Y plane, the breeder blanket of Fig. 5a is depicted as also having a steel conduit 530 comprising the first sections 540 and the second sections 550 previously described, wherein the steel conduits 530 extend in the X-Y plane. The second sections 550 are proximate to the fusion plasma and the front wall 510. The first sections 540 are remote from the fusion plasma 520 and the front wall 510. There are also provided steel pipes/tubes 570 that are connected to, or integrally formed with, first sections 540 and second sections 550 of the steel conduit 530 of the nuclear fusion breeder blanket 500.

Figs. 5a & 5b reveal that the breeder blanket 500 comprises three-dimensional (3-D) steel conduits 530, each comprising the first sections 540 and the second sections 550 as previously described. The 3-D array extends in both the Y-Z plane (Fig. 5a) and the X-Y plane (Fig. 5b).

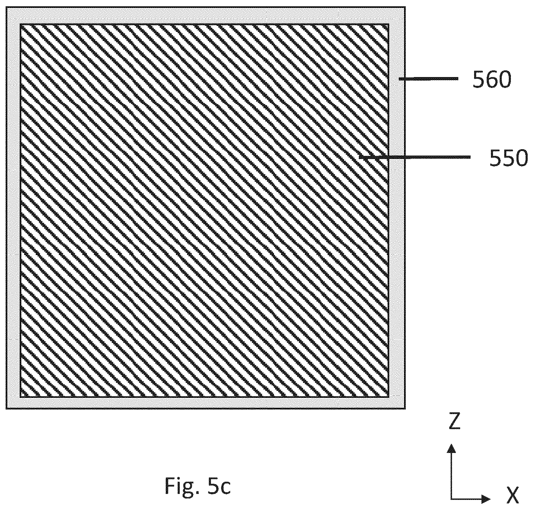

Fig. 5c depicts the nuclear fusion breeder blanket 500 of Fig. 5a & 5b in the X-Z plane (the nuclear fusion breeder blanket module 500 viewed from the plane of the front wall 510). Fig. 5c depicts the X-Z plane of the 3-D steel conduits 530.

Figs. 5a-5c reveals that the steel conduits 530 may be a cuboid, or a parallelepiped. The cuboid or parallelepiped may be hollow to allow the flow of liquid breeder material through the steel conduits 530.

Additionally, the nuclear fusion breeder blanket 500 may have baffles 590 inside the breeder blanket (not shown) to direct the flow of the liquid breeder material around the breeder blanket. The baffles 590 may be similar in design to the front wall 510, and comprise of the same material as the front wall 510. Alternatively, the baffles 590 may comprise the same material as the first sections 540 of the steel conduits 530. Alternatively, the baffles 590 may comprise the same material as the second sections 550 of the steel conduits 530.

The embodiment of Figs. 5a-5c benefits from the same advantages as the embodiment of Figs. 3a-3c. In addition, the embodiment of Figs. 5a-5c advantageously has fewer welds that than of Figs. 3a-3c on account of the orientation and arrangement of the steel conduits. This has the possibility of making it easier to manufacture. The Fig. 5 arrangement also advantageously does not require bends in the second (ODS) sections.

As an example, in operation the liquid breeder material flows through the steel conduits 520 of the nuclear fusion breeder blanket 500. Preferably, the liquid breeder material is fed into the breeder blanket 500 via a steel pipe / tube 570 connected to, or integrally formed with, a first section 540 of a steel conduit 530 located at the bottom of the nuclear fusion breeder blanket.

As an example, in the embodiment of Figs. 5a-5c, the liquid breeder material flows around the nuclear fusion breeder blanket 500 through the steel conduits 520. The flow of the liquid breeder material may be free, or may be directed in a serpentine or other extended path by baffles 590 located around the inside of the breeder blanket 500, for example alternate and overlapping baffles that create a flow pathway throughout the volume, increasing efficiency of heat transfer and avoiding static areas of low flow which do not contribute to removal of heat. The liquid breeder material exits the nuclear fusion breeder blanket via the another steel pipe / tube 570.

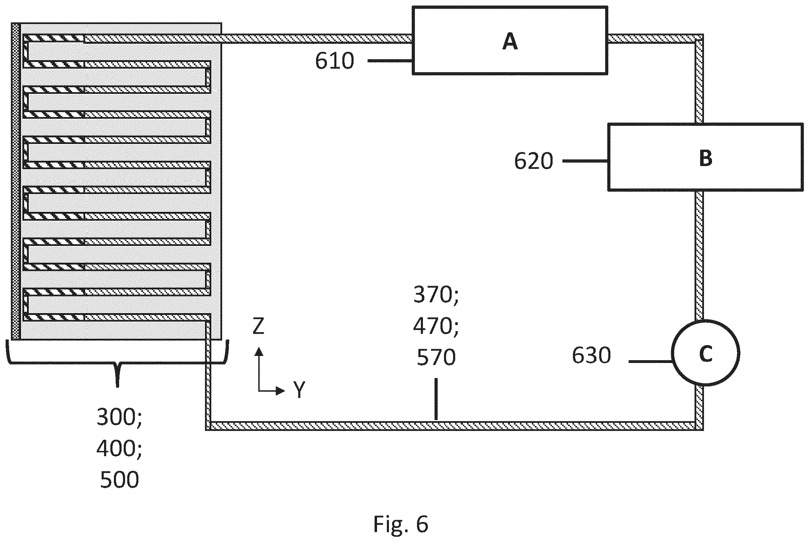

Fig. 6 depicts a system for breeding tritium fuel for use in a nuclear fusion reactor. The system comprises a nuclear fusion breeder blanket 300 in accordance with breeder blanket of Figs. 3a-3c. The person skilled in the art however will understand that the nuclear fusion breeder blankets 400, 500 described with reference to Figs. 4a-4d & 5a-5c can similarly be incorporated into the system for breeding tritium fuel for use in a nuclear fusion reactor depicted in Fig. 6. The nuclear fusion breeder blanket 300, 400, 500 of the system is connected to, or integrally formed with, steel pipes / tube 370, 470, 570 to allow the flow of liquid breeder material around the system, As well as a nuclear fusion breeder blanket 300, 400, 500, the system may further comprise a heat exchanger 610, 620, 630, a purification system 610, 620, 630 and a tritium extraction system 610, 620, 630. Additionally, a pump may be incorporated into the system to pump the liquid breeder material through the system (not shown but could be any one of 610, 620, 630).

As an example, in operation liquid breeder material flows through the steel pipes / tube 370, 470, 570 of the system into the top of a breeder blanket 300, 400, 500. The liquid breeder material subsequently flows through the breeder blanket(s) 300, 400, 500 as previously described. Once the liquid breeder material has flowed through the last breeder blanket(s) 300, 400, 500, it flows out of the bottom of the breeder blanket and through a heat exchanger 610, 620, 630, to extract heat energy from the liquid breeder material to generate electricity; a purification system 610, 620, 630, to filter the liquid breeder material and remove impurities from the material; and a tritium extraction system 610, 620, 630, to extract tritium produced in the liquid breeder blanket to use in the nuclear fusion reactor plasma. The liquid breeder material may then be pumped back around the system and into the breeder blankets(s) 300, 400, 500 again.

It will be understood by a person skilled in the art that the specific direction in which the liquid breeder material flows through the system is not limited by the exemplar operation described above. For example, the liquid breeder material may enter the bottom of the nuclear breeder blanket.

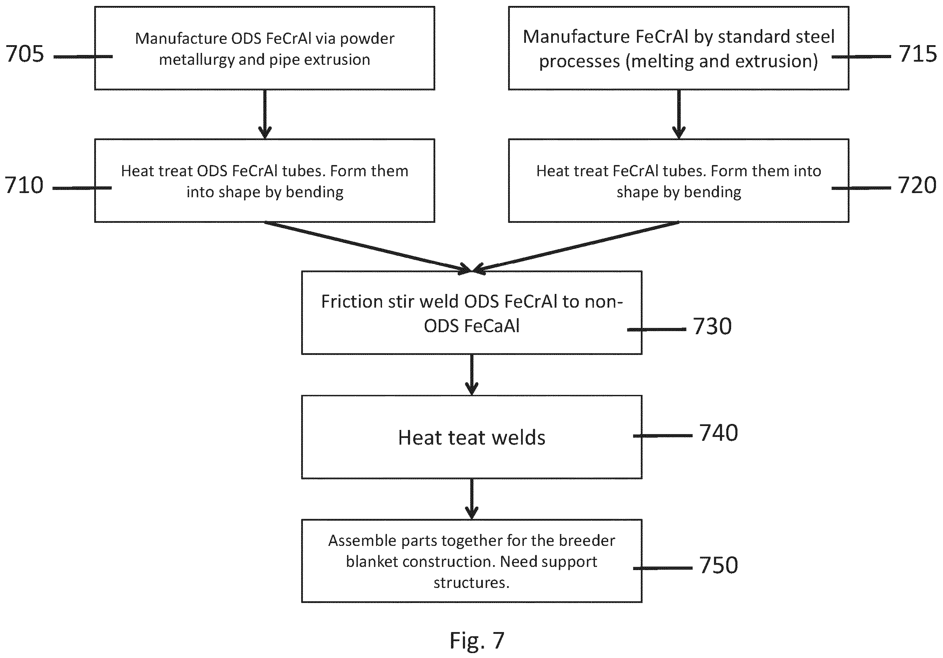

Fig. 7 depicts a method of constructing any of the breeder blankets of Figs. 3-5 for use in a plasma fusion reactor.

At step 705 the second sections 350, 450, 550 of each of the plurality of steel conduits 330, 430, 530 are manufactured from alumina-forming ferritic steel, such as e.g. FeCrAl alloys via powder metallurgy and pipe extrusion. For example, gas-atomised FeCrAl powder is ball milled with oxide powders such as e.g. $Y_2O_3$ and FeO powder, $Y_2O_3$ and $ZrO_2$ or $Y_2O_3$ and $TiO_2$ powder. It will be understood that other compositions of oxide powders are possible. Once milled, the resultant powders are degassed, sealed and extruded to form oxide dispersed strengthen (ODS) FeCrAl alloy steel tubes.

At step 710 the second sections 350, 450, 550 of each of the plurality of steel conduits 330, 430, 530 (i.e. the ODS FeCrAl alloy steel tubes) is heat treated. For example, the steel will be heated to a tempering stage (600 - 800 °C) for a specified length of time (e.g. anywhere between 30 minutes to 4 hours) to develop various microstructure features, such as carbide formation, nitride formation, and nano-oxide development. Following heat treatment, they are bent and formed into shape.

At step 715 the first sections 340, 440, 540 of each of the plurality of steel conduits 330, 430, 530 are manufactured from alumina-forming ferritic steel, such as e.g. FeCrAl alloys using standard steel processes such as melting and extrusion, wherein the FeCrAl alloy is pushed through a die of the desired cross-section to form FeCrAl alloy steel tubes i.e. non-ODS FeCrAl alloy steel tubes.

At step 720 first sections 340, 440, 540 of each of the plurality of steel conduits 330, 430, 530 (i.e. the non-ODS FeCrAl alloy steel tubes) are heat treated. For example, the steel will be heated to a tempering stage (600 - 800 °C) for a specified length of time (e.g. anywhere between 30 minutes to 4 hours) to develop various microstructure features, such as carbide formation and nitride formation. Following heat treatment, they are bent and formed into shape.

At step 730 the first sections 350, 450, 550 and the second sections 350, 450, 550 are friction stir welded together to form each of the plurality of steel conduits 330, 430, 530. For example, one end of the first sections 350, 450, 550 and another end the second sections 350, 450, 550 may be clamped down in contact with one another beneath a friction stir welding (FSW) tool that straddles the join. This will be the weld region. The FSW tool is rotated and, as it is plunged into the weld region, frictional heat is generated, causing a plasticised zone to form in the weld region. The FSW tool is then passed around the weld region (or the two sections are rotated so that the FSW tool passes circumferentially around the join). A special profile on a probe of the FWS tool forces plasticised material to mix, forming a weld.

At step 740 the weld region formed between first sections 350, 450, 550 and the second sections 350, 450, 550 of the steel conduits 330, 430, 530 are heat treated. For example, the steel will be heated between 400 - 600 °C to enable the relaxation of residual stresses generated within the weld region for a specified length of time e.g. anywhere between 30 minutes to 4 hours.

At 750 the breeder blanket is constructed by connecting its individual component parts to assemble the breeder blanket configuration of Figs. 3-5.. For example, the steel conduits 330, 430, 530 may be provided with a 3-D support structure that supports the weight of the steel conduits 330, 430, 530. In addition, a front wall 310, 410, 510 is secured to the side of the steel conduits 330, 430, 530 that will be proximate to the fusion plasma when the breeder blanket is installed in the fusion reactor. Furthermore, the breeder blanket may be connected to steel pipework 370, 470, 570 external to the breeder blanket for directing liquid breeder material from the breeder blanket to a heat exchanger, a purification system and a tritium extraction system before returning the liquid breeder material to the breeder blanket.

It will be understood that the steps 705 to 750 do not have to be followed in a specific order when manufacturing the breeder blanket. For example, having manufactured the first sections 340; 440; 540 and the second sections 350, 450, 550 (steps 705 & 715 respectively), the first sections and the second sections may be friction stir welded together as described at step 730, prior to heat treating and bending the first sections and the second sections at steps 710 & 720.

It will also be understood the steps 705 to 750 may be performed in different orders to those disclosed here. For example, all the welding steps an be performed on one long straight section of pipe and then it can be heat treated at sections along its length and bent into shape. Alternatively, the steps 705 to 750 may be repeated numerous times in the process of constructing the breeder blanket For example, having manufactured the first sections 340, 440, 540 and the second sections 350, 450, 550 of the steel conduits (steps 705 & 715 respectively), portions of the first sections 340; 440; 540 and the second sections 350, 450, 550 that are not used to form the weld region between the two different sections may be heat treated and bent into shape, prior to the first sections 340, 440, 540 and the second sections 350, 450, 550 being welded together using friction stir welding. Once the first sections 340, 440, 540 and the second sections 350, 450, 550 are welded together, those sections may then be further heat treated and further bent into shape, for example by bending sections on either side of a weld region. This gives clearer access to the join for applying the welding tool.

It is to be understood that the claims are not limited to the precise configuration and components illustrated above. Various modifications, changes and variations may be made in the arrangement, operation and details of the breeder blanket, and its method of manufacture described above without departing from the scope of the invention as defined in the appended claims.

**Claims**

1. A breeder blanket (300; 400; 500) for a plasma fusion reactor, comprising:

   a front wall (310; 410; 510); and
   steel conduits (330; 430; 530) located on a side of the front wall opposite (310; 410; 510) to a plasma, the steel conduits having first sections (340; 440; 540) and second sections (350; 450; 550) for circulation of liquid breeder material, wherein the steel of the first sections and the second sections is alumina-forming steel, FeCrAl, and, wherein the first sections (340; 440; 540) are remote from the plasma and the second sections (350; 450; 550) are proximate to the plasma,
   **characterized in that**
   the steel of the second sections (350; 450; 550) is enhanced with dispersed particles of oxide.

2. The breeder blanket of claim 1, wherein the particles are smaller than 100nm in diameter on average, preferably, wherein the particles are smaller than 50nm in diameter on average, more preferably, wherein the particles are 5nm on average in diameter.

3. The breeder blanket of claim 1 or 2, wherein the particles of oxide are nanoparticles of one or more oxides selected from the group: Yttrium oxide, $Y_2O_3$, Zirconium dioxide, $ZrO_2$, or mixtures thereof.

4. The breeder blanket of claim 1, wherein the steel of the first sections of the steel conduits comprise, by weight %:

   8.0 - 14.0 Chromium, Cr,
   3.0 - 6.0 Aluminium, Al,
   0.5 - 2.0 Molybdenum, Mo,
   0.5 - 1.1 Niobium, Nb,
   0.1 - 0.2 Titanium, Ti, and
   less than 0.02 of each of Carbon, C, and Nitrogen, N, and
   wherein the remaining balance comprises Iron, Fe.

5. The breeder blanket of claim 4, wherein the steel of the first sections of the steel conduits comprise, by weight %:

   8.5 - 9.5 Cr,
   5.0 - 6.0 Al,
   1.1 - 1.5 Mo,
   0.9 - 1.1 Nb,
   0.125 - 0.175 Ti.

6. The breeder blanket of any one of claims 1-5, wherein the ratio of a length of the first sections of the steel conduits to a length of the second sections of the steel conduits is greater than 1.

7. The breeder blanket of claim 1-5, wherein the steel conduits form a hollow parallelepiped, optionally, wherein the ratio of a length of the first sections of the steel conduits to a length of the second sections of the steel conduits is less than 1.

8. The breeder blanket of claim 6 or 7, wherein the breeder blanket further comprises one or more baffles inside the breeder blanket.

9. The breeder blanket of any one of claims 1-8, wherein the second sections of the steel conduits further comprise a weld region where the second sections and the first sections of the steel conduits are connected together, wherein the second sections of the steel conduits have a uniform distribution of oxide particles outside the weld region and the weld region is depleted of the dispersed particles of oxide.

10. A system for breeding tritium fuel comprising the breeder blanket of any preceding claim, further comprising steel pipework for directing liquid breeder material from the breeder blanket to a heat exchanger, a purification system and a tritium extraction system before returning the liquid breeder material to the breeder blanket.

11. The system of claim 10, wherein the material used for the pipework is alumina-forming ferritic steel, FeCrAl.

12. A method of constructing a breeder blanket for a plasma fusion reactor comprising steel conduits for circulation of liquid breeder material, the method comprising:

   forming, by pilgering, first sections of the steel conduits from alumina-forming ferritic steel;
   forming, by extrusion, second sections of the steel conduits from oxide dispersion strengthened, ODS alumina-forming ferritic steel having dispersed particles of oxide;
   welding the second sections to the first sections; and
   securing, to a side of the steel conduits, a front wall.

13. The method of constructing a breeder blanket of claim 12, wherein the first sections and the second sections are welded together using friction stir welding, optionally, wherein the dispersed particles of oxide are smaller than 100 nm in diameter on average, preferably smaller than 50 nm in diameter on average, more preferably 5 nm in diameter on average.

14. The method of constructing a breeder blanket of claim 12 or 13, wherein the dispersed particles of oxide nanoparticles of one or more oxides selected from the group: Yttrium oxide, $Y_2O_3$, Zirconium dioxide, $ZrO_2$, or mixtures thereof.

**15.** The method of constructing a breeder blanket of claim 12, wherein forming the steel of the first sections of the conduits comprises:

providing by weight %:

8.0 - 14.0 Chromium, Cr,
3.0 - 6.0 Aluminium, Al,
0.5 - 2.0 Molybdenum, Mo,
0.5 - 1.1 Niobium, Nb,
0.1 - 0.2 Titanium, Ti, and
less than 0.02 of each of Carbon, C, and Nitrogen, N, and
wherein the remaining balance comprises Iron, Fe; and

consolidating into steel.

**Patentansprüche**

**1.** Brutmantel (300; 400; 500) für einen Plasmafusionsreaktor, der Folgendes umfasst:

eine vordere Wand (310; 410; 510); und
Stahlleitungen (330; 430; 530), die sich auf einer Seite der vorderen Wand, entgegengesetzt (310; 410; 510) einem Plasma, befinden, wobei die Stahlleitungen erste Abschnitte (340; 440; 540) und zweite Abschnitte (350; 450; 550) zum Umlauf von flüssigem Brutstoff aufweisen, wobei der Stahl der ersten Abschnitte und der zweiten Abschnitte Aluminiumoxid-bildender Stahl, FeCrAl, ist und wobei die ersten Abschnitte (340; 440; 540) von dem Plasma entfernt sind und die zweiten Abschnitte (350; 450; 550) nahe dem Plasma sind,
**dadurch gekennzeichnet, dass**
der Stahl der zweiten Abschnitte (350; 450; 550) mit verteilten Partikeln von Oxid verstärkt ist.

**2.** Brutmantel nach Anspruch 1, wobei die Partikel im Durchschnitt kleiner sind als 100 nm im Durchmesser, bevorzugt wobei die Partikel im Durchschnitt kleiner sind als 50 nm im Durchmesser, bevorzugter wobei die Partikel im Durchschnitt 5 nm im Durchmesser sind.

**3.** Brutmantel nach Anspruch 1 oder 2, wobei die Partikel von Oxid Nanopartikel von einem oder mehreren Oxiden sind, die aus der folgenden Gruppe ausgewählt sind: Yttriumoxid, $Y_2O_3$, Zirkoniumdioxid, $ZrO_2$, oder Mischungen davon.

**4.** Brutmantel nach Anspruch 1, wobei der Stahl der ersten Abschnitte der Stahlleitungen, bezogen auf Gewichts-%, Folgendes umfasst:

8,0-14,0 Chrom, Cr,
3,0-6,0 Aluminium, Al,
0,5-2,0 Molybdän, Mo,
0,5-1,1 Niob, Nb,
0,1-0,2 Titan, Ti, und
weniger als 0,02 von jeweils Kohlenstoff, C, und Stickstoff, N, und
wobei die verbleibende Differenz Eisen, Fe, umfasst.

**5.** Brutmantel nach Anspruch 4, wobei der Stahl der ersten Abschnitte der Stahlleitungen, bezogen auf Gewichts-%, Folgendes umfasst:

8,5-9,5 Cr,
5,0-6,0 Al,
1,1-1,5 Mo,
0,9-1,1 Nb,
0,125-0,175 Ti.

**6.** Brutmantel nach einem der Ansprüche 1-5, wobei das Verhältnis einer Länge der ersten Abschnitte der Stahlleitungen zu einer Länge der zweiten Abschnitte der Stahlleitungen größer als 1 ist.

**7.** Brutmantel nach Anspruch 1-5, wobei die Stahlleitungen ein hohles Parallelepiped bilden, optional wobei das Verhältnis einer Länge der ersten Abschnitte der Stahlleitungen zu einer Länge der zweiten Abschnitte der Stahlleitungen kleiner als 1 ist.

**8.** Brutmantel nach Anspruch 6 oder 7, wobei der Brutmantel weiter eine oder mehrere Prallplatten im Inneren des Brutmantels umfasst.

**9.** Brutmantel nach einem der Ansprüche 1-8, wobei die zweiten Abschnitte der Stahlleitungen weiter einen Schweißbereich umfassen, wo die zweiten Abschnitte und die ersten Abschnitte der Stahlleitungen miteinander verbunden sind, wobei die zweiten Abschnitte der Stahlleitungen eine gleichmäßige Verteilung von Oxidpartikeln außerhalb des Schweißbereichs aufweisen und die verteilten Partikel von Oxid in dem Schweißbereich dezimiert sind.

**10.** System zum Erbrüten von Tritium-Brennstoff, das den Brutmantel nach einem vorstehenden Anspruch umfasst und weiter Folgendes umfasst: Stahlrohrleitungen zur Führung von flüssigem Brutstoff aus dem Brutmantel zu einem Wärmeaustauscher, einem Aufreinigungssystem und einem Tritium-Extraktionssystem vor der Rückführung des flüssigen Brutstoffs zu dem Brutmantel.

**11.** System nach Anspruch 10, wobei das Material, das für die Rohrleitungen verwendet wird, Aluminiumoxid-bildender ferritischer Stahl, FeCrAl, ist.

**12.** Verfahren zum Aufbau eines Brutmantels für einen Plasmafusionsreaktor, der Stahlleitungen zum Umlauf von flüssigem Brutstoff umfasst, wobei das Verfahren Folgendes umfasst:

Bilden durch Pilgern von ersten Abschnitten der Stahlleitungen aus Aluminiumoxid-bildendem ferritischem Stahl;
Bilden durch Extrusion von zweiten Abschnitten der Stahlleitungen aus durch Oxidverteilung verstärktem, Aluminiumoxid-bildendem ferritischem ODS-Stahl, der verteilte Partikel von Oxid aufweist;
Schweißen der zweiten Abschnitte an die ersten Abschnitte; und
Befestigen einer vorderen Wand an einer Seite der Stahlleitungen.

**13.** Verfahren zum Aufbau eines Brutmantels nach Anspruch 12, wobei die ersten Abschnitte und die zweiten Abschnitte unter Verwendung von Rührreibschweißen zusammengeschweißt werden, optional wobei die verteilten Partikel von Oxid im Durchschnitt kleiner sind als 100 nm im Durchmesser, bevorzugt im Durchschnitt kleiner sind als 50 nm im Durchmesser, bevorzugter im Durchschnitt 5 nm im Durchmesser sind.

**14.** Verfahren zum Aufbau eines Brutmantels nach Anspruch 12 oder 13, wobei die verteilten Partikel von Oxid Nanopartikel von einem oder mehreren Oxiden sind, die aus der folgenden Gruppe ausgewählt sind: Yttriumoxid, $Y_2O_3$, Zirkoniumdioxid, $ZrO_2$, oder Mischungen davon.

**15.** Verfahren zum Aufbau eines Brutmantels nach Anspruch 12, wobei das Bilden des Stahls der ersten Abschnitte der Leitungen Folgendes umfasst:

Bereitstellen von, bezogen auf Gewichts-%:

8,0-14,0 Chrom, Cr,
3,0-6,0 Aluminium, Al,
0,5-2,0 Molybdän, Mo,
0,5-1,1 Niob, Nb,
0,1-0,2 Titan, Ti, und
weniger als 0,02 von jeweils Kohlenstoff, C, und Stickstoff, N, und
wobei die verbleibende Differenz Eisen, Fe, umfasst; und

Vereinigen zu Stahl.

**Revendications**

**1.** Couverture de surgénérateur (300 ; 400 ; 500) pour un réacteur à fusion plasma, comprenant :

une paroi avant (310 ; 410 ; 510) ; et

des conduits en acier (330 ; 430 ; 530) situés sur un côté de la paroi avant (310 ; 410 ; 510) opposé au plasma, les conduits en acier ayant des premières sections (340 ; 440 ; 540) et des secondes sections (350 ; 450 ; 550) destinés à la circulation d'un matériau surgénérateur liquide, dans laquelle l'acier des premières sections et des secondes sections est un acier formant de l'alumine, FeCrAl, et dans laquelle les premières sections (340 ; 440 ; 540) sont éloignées du plasma et les secondes sections (350 ; 450 ; 550) sont proches du plasma, **caractérisée en ce que** l'acier des secondes sections (350 ; 450 ; 550) est amélioré avec des particules dispersées d'oxyde.

2. Couverture de surgénérateur selon la revendication 1, dans laquelle les particules ont un diamètre moyen inférieur à 100 nm, de préférence, dans laquelle les particules ont un diamètre moyen inférieur à 50 nm, plus préférablement, dans laquelle les particules ont un diamètre moyen de 5 nm.

3. Couverture de surgénérateur selon la revendication 1 ou 2, dans laquelle les particules d'oxyde sont des nanoparticules d'un ou plusieurs oxydes choisis dans le groupe : oxyde d'yttrium, $Y_2O_3$, dioxyde de zirconium, $ZrO_2$, ou des mélanges de ceux-ci.

4. Couverture de surgénérateur selon la revendication 1, dans laquelle l'acier des premières sections des conduits en acier comprend, en pourcentage en poids :

8,0 à 14,0 de chrome, Cr,
3,0 à 6,0 d'aluminium, Al,
0,5 à 2,0 de molybdène, Mo,
0,5 à 1,1 de niobium, Nb,
0,1 à 0,2 de titane, Ti et
moins de 0,02 de chacun des éléments carbone, C, et azote, N, et
dans laquelle le reste comprend du fer, Fe.

5. Couverture de surgénérateur selon la revendication 4, dans laquelle l'acier des premières sections des conduits en acier comprend, en pourcentage en poids :

8,5 à 9,5 de Cr,
5,0 à 6,0 d'Al,
1,1 à 1,5 de Mo,
0,9 à 1,1 de Nb,
0,125 à 0,175 de Ti.

6. Couverture de surgénérateur selon l'une quelconque des revendications 1 à 5, dans laquelle le rapport entre une longueur des premières sections des conduits en acier et une longueur des secondes sections des conduits en acier est supérieur à 1.

7. Couverture de surgénérateur selon les revendications 1 à 5, dans laquelle les conduits en acier forment un parallélépipède creux, éventuellement dans laquelle le rapport entre une longueur des premières sections des conduits en acier et une longueur des secondes sections des conduits en acier est inférieur à 1.

8. Couverture de surgénérateur selon les revendications 6 ou 7, dans laquelle la couverture de surgénérateur comprend en outre un ou plusieurs déflecteurs à l'intérieur de la couverture de surgénérateur.

9. Couverture de surgénérateur selon l'une quelconque des revendications 1 à 8, dans laquelle les secondes sections des conduits en acier comprennent en outre une zone de soudure où les secondes sections et les premières sections des conduits en acier sont reliées entre elles, dans laquelle les secondes sections des conduits en acier présentent une distribution uniforme de particules d'oxyde à l'extérieur de la zone de soudure et la zone de soudure est dépourvue des particules dispersées d'oxyde.

10. Système de surgénération de combustible au tritium comprenant la couverture de surgénérateur selon une quelconque revendication précédente, comprenant en outre une tuyauterie en acier pour diriger le matériau de surgénérateur liquide à partir de la couverture de surgénérateur vers un échangeur de chaleur, un système de purification et un système d'extraction du tritium avant de renvoyer le matériau de surgénérateur liquide vers la couverture de surgénérateur.

**11.** Système selon la revendication 10, dans lequel le matériau utilisé pour la tuyauterie est de l'acier ferritique formant de l'alumine, FeCrAl.

**12.** Procédé de construction d'une couverture de surgénérateur pour un réacteur à fusion plasma comprenant des conduits en acier destinés à la circulation du matériau de surgénérateur liquide, le procédé comprenant :

la formation, par laminage, à pas de pèlerin de premières sections des conduits en acier à partir d'acier ferritique formant de l'alumine ;
la formation, par extrusion, de secondes sections des conduits en acier à partir d'acier ferritique formant de l'alumine, renforcé par dispersion d'oxyde, ODS, ayant des particules dispersées d'oxyde;
le soudage des secondes sections aux premières sections ; et
la fixation, sur un côté des conduits en acier, d'une paroi avant.

**13.** Procédé de construction d'une couverture de surgénérateur selon la revendication 12, dans lequel les premières sections et les secondes sections sont soudées ensemble par soudage par friction-malaxage, éventuellement, dans lequel les particules dispersées d'oxyde ont un diamètre moyen inférieur à 100 nm, de préférence un diamètre moyen inférieur à 50 nm, et plus préférablement un diamètre moyen de 5 nm.

**14.** Procédé de construction d'une couverture de surgénérateur selon la revendication 12 ou 13, dans lequel les particules dispersées d'oxyde sont des nanoparticules d'un ou plusieurs oxydes choisis dans le groupe : oxyde d'yttrium, $Y_2O_3$, dioxyde de zirconium, $ZrO_2$, ou des mélanges de ceux-ci.

**15.** Procédé de construction d'une couverture de surgénérateur selon la revendication 12, dans lequel la formation de l'acier des premières sections des conduits comprend :

la fourniture en pourcentage en poids :

8,0 à 14,0 de chrome, Cr,
3,0 à 6,0 d'aluminium, Al,
0,5 à 2,0 de molybdène, Mo,
0,5 à 1,1 de niobium, Nb,
0,1 à 0,2 de titane, Ti, et
moins de 0,02 de chaque élément parmi le carbone, C, et l'azote, N, et
dans lequel le reste comprend du fer, Fe ; et

la consolidation en acier.

FIG. 1

FIG. 2

Fig. 3a

EP 4 285 389 B1

Fig. 3b

Fig. 3c

Fig. 4a

EP 4 285 389 B1

Fig. 4b

Fig. 4c

Fig. 5a

Fig. 5b

Fig. 5c

EP 4 285 389 B1

Fig. 6

EP 4 285 389 B1

705 — Manufacture ODS FeCrAl via powder metallurgy and pipe extrusion

Manufacture FeCrAl by standard steel processes (melting and extrusion) — 715

710 — Heat treat ODS FeCrAl tubes. Form them into shape by bending

Heat treat FeCrAl tubes. Form them into shape by bending — 720

Friction stir weld ODS FeCrAl to non-ODS FeCaAl — 730

Heat teat welds — 740

Assemble parts together for the breeder blanket construction. Need support structures. — 750

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 111863286 A

### Non-patent literature cited in the description

- **RAIMAN, STEPHEN S.** ; **SANGKEUN LEE**. Aggregation and Data Analysis of Corrosion Studies in Molten Chloride and Fluoride Salts.. *Journal of Nuclear Materials*, 2018, vol. 511, 523-35

- **FDS TEAM**. Fusion-based hydrogen production reactor and its material selection. *Journal of Nuclear Materials*, 2009, vol. 386-388, 122-126
- **MORLEY N. B**. Recent research and development for the dual-coolant blanket concept in the US. *Fusion Engineering & Design*, 2008, vol. 83, 920-927